# EUROPEAN PATENT APPLICATION

(11) **EP 2 460 401 A1**
(43) Date of publication of application: **06.06.2012**
(21) Application number: 10803939.7
(22) Date of filing: 27.07.2010
(51) Int. Cl.: A01G 9/02

(54) **THREE-DIMENSIONAL SUSTAINABLE PLANT COVERAGE STRUCTURE**

(30) Priority: 31.07.2009 ES 200901772
(71) Applicant: Universidad De Almería, 04120 Almería (ES); Burés Pastor, Silvia, 08022 Barcelona (ES)
(72) Inventor: URRESTARAZU GAVILÁN, Miguel, E-04008 Almería (ES); BURÉS PASTOR, Silvia, 8022 Barcelona (ES)
(74) Representative: ZBM Patents
(86) International application number: PCT/ES2010/000360
(87) International publication number: WO 2011/012748

(57) **Abstract**

Three-dimensional sustainable plant coverage structure. The invention relates to hydroponics and soilless cultivation for use in modern landscaping of sustainable buildings. It comprises independent, superposable modular cultivation units, and includes unit anchoring means and fertigation and drainage systems. The units are autonomous and blend into the surrounding environment. They are installed on three-dimensional architectural surfaces. The holes for plants are designed so as to prevent not only substrate from falling out the sides but also the removal of individual plants by people. Each cultivation unit is independent in terms of fertigation and it is therefore possible to mix plants and vegetation with different watering requirements. The cultivation units are watered by pressure-compensating, non-drain drip emitters, one for each cultivation unit.

## Description

### Field of the invention

This invention relates to hydroponics and soilless cultivation for use in modern landscaping of sustainable buildings, more specifically it refers to the production of a cultivation unit that is designed and constructed to allow superposition and independence of the other units in fertigation and drainage collection, which means it is autonomous and blends in with its surroundings.

It falls into the European Patent Classification: A01G9/02C (N: pots for vertical horticulture; multi-tiered planters); E0C1/39B (N: for claustra, fences, planting walls), International Patent Classification (Eighth edition) A01 G 9/00 flower cultivation, vegetables or rice in containers, beds or greenhouses, A01 G 9/02 containers, for example, pots or planters; containers for flower cultivation; E04C 1/00 construction elements in form of blocks or any other for the construction of parts of buildings; E04C 1/39 characterised by specific adaptations, for example, used for conduit execution, to form friezes, cornices or ledges, for anchoring rebar or door frames for enclosures.

### State of the art

Right from the earliest Neolithic settlements, humanity has modified its surroundings to make them more habitable and comfortable, including classic gardening.

Soilless and hydroponics cultivation have contributed to improve ornamentation techniques and habitability through this more modern gardening. Enjoying the benefits from aesthetic conditioning and the climate through plants in dwellings and public spaces is an adequate decision (Julián Briz Escribano and Isabel de Felipe, 2004, Incorporating nature into every corner of the city: urban vegitecture. Architecture and Landscaping, 120:12-19: Julián Briz Escribano, 2004. Urban vegitecture: ecologic roofs and environmental improvement. Ed. Mundi-Press, page 396). But it must be accomplished with adequate infrastructure, with weighted costs and minimum phytosanitary risk in the three-dimensional constructions being executed.

Eleftheria Alexandri and Phil Jones (2007 and 2008) (Temperature decreases in an urban canyon due to green walls and roofs in diverse climates, Building and Environment, 43:480-493; Developing a one-dimensional heat and mass transfer algorithm for describing the effect of green roofs on the built environment: Comparison with experimental results, Building and Environment, 42:2007:2835-2849 have undertaken an exhaustive review of the advantages of habitability and climatic control of buildings with green roofs and walls in civil area, determining its advantages.

Multiple possibilities have been considered for these three-dimensional constructions, taking Mother Nature as the model. Some of them start from simple blocks, being the plants placed in the cavities between them, William B. Dawson in 1999 (Plantable retaining wall block, United States Patent number 5,913,790), which subsequently improved the anchoring for securing the wall, Michael E. Woolford and Dick J. Sievert in 2001 (Composite Masonry Block, United States Patent number 5,913,790).

The following technical step is applied to the walls by covering them with greenery. Various models have been developed for this, the most technologically advanced and similar to this invention are those patented by Andrew Getting et al, in 2006 (Andrew Getting, Ronald A. Yokubison, David F. Smith, Charlie M. Graves, Troy D. Mohr, Thayne B. Hannay, Joseph M. Ure, United States Patent number 20060285920 A1), Tribel Francois (Tribel Francois 2009, Patent FR2857396) and SOPREMA 2009 (Patent ES2300049T3), these patents essentially resolve two different considerations.
1. That the substrate contained in the cultivation unit cannot move vertically (the latter also incorporates forced aeration) and be lost due to gravity, being retained and available to the roots of the plants in each unit or root cell, but the substrate on the side where the vegetation is planted can be manipulated by the observer, with the observer also having the possibility to remove part of the vegetation. In this invention, the plants are established by holes that are much smaller than the final cell when plant transplantation or positioning takes place. Thus, not only is lateral substrate falling but also individual plant extraction by the observer prevented. The cultivation unit only has three identical internal spaces or cavities. These are interconnected together, where the plants can send out their roots and, at the same time, air can flow, together with irrigation and fertigation fluids. This being the main difference in this respect compared to the cited patents.
2. The previous patents also resolve how to anchor the cultivation unit to the architectonic elements. But, in these patent models, the cultivation unit is not allowed to rotate through 180° around the observation plane (which is the same as vegetation canopy). Each unit can be removed individually by simply unhooking them from their anchor points. The invention described here, when removed from it anchor point can be rotated through 180° in the vegetation canopy. When each unit is arranged on its securing rails, on which it can run horizontally, the anchor points ensure that cultivation unit movement is not possible from the vegetation canopy plane towards the observer by traction, in other words, cultivation unit movement perpendicular to the vegetation canopy is not allowed, so that its manipulation or removal is prevented.

Something that is not resolved by the previously mentioned patents is preventing that drainage passes from one unit to another with the associated phytosanitary risk, with this being the main limitation. Which means it is possible to transmit root system diseases through the fertigation system from one unit to another. The individual drainage collection is not resolved and hence, the source of contamination and associated phytosanitary risk, leading to frequent plant replacement due to disease. Some described patents have individual module irrigation in an independent fashion, although each one always has a fixed irrigation supply. This invention enables each unit or module to be fitted with a different irrigation supply as chosen by the operator in function of his interests. The therefore provides the possibility of mixing plants and vegetation with differing water consumption requirements.

The objective system of this patent has all the advantages of the previous ones, but also prevents any removal (manipulation by the observer) and it is also easy to install and resolves the individualisation of each cultivation unit in: fertigation, the patent objectives provide improved design of the cultivation unit, installation and its construction with recycled materials.

### Disclosure of the invention

Modular units have been designed and constructed for executing green roofs, apparently forming a single surface where only a continuous vegetation canopy can be seen, inaccessible to the surface that constitutes the plant roots and the fertigation and drainage system remaining out of sight to the observer.

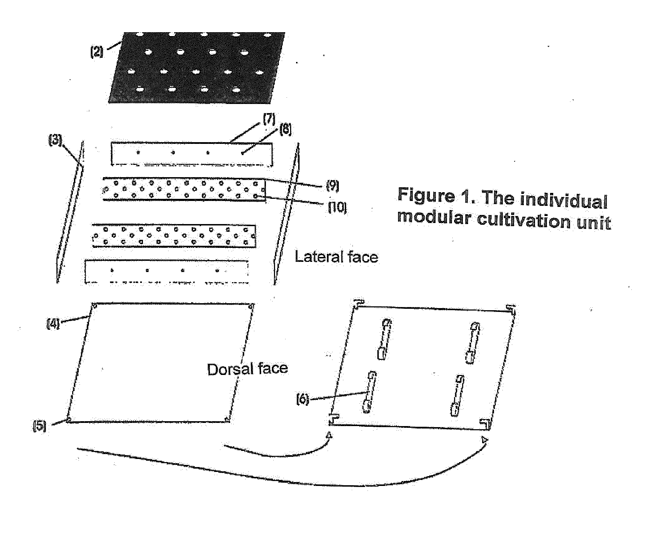

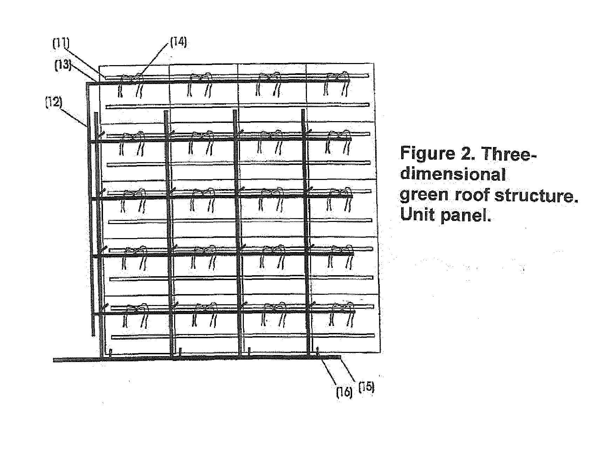

The problem that arises from covering a three-dimensional surface with vegetation is that it ends up with continuity in fertigation in the root part if its evacuation is not made independent by means of modules. In the invention described here, the individual modules (Figure 1) are made independent so that each unit performs autonomously and hence, cannot transmit any phytosanitary root problems from one unit to another. The size of each unit is determined by the ability of the operators to install them at several metres from the ground and to transport them to the corresponding site. Module superposition closes the surface covered by the vegetation so that the observer only sees the surface completely covered by the selected vegetation, with one or more plant species coexisting and where it is not possible to remove the actual modules or the anchor, fertigation and drainage elements (prevents theft). The unit has a ventral face where the plants are planted and a dorsal face for drainage and anchorage to the supporting wall. The upper face allows fertigation entry. The following are installed on the wall: (Figure 2) the unit hook securing elements, the nutritive solution injection elements and the drainage collection installation. It applies to all current energy-efficient and environmentally sustainable architecture.

### Detailed disclosure of the invention

One embodiment of the system could be as follows: a system comprising two sections: part A and part B.

**Part A.** The individual modular cultivation unit (UCIM) (Figure 1) is independent and can be connected to others. It is a closed parallelopiped, formed by continuous faces or surfaces. The average measurements are 60 x 40 x 8 cm, while the cultivation unit tolerance is ±10%. In the case of the 8 cm, this could also be either 6 or 4 cm.

The UCIM is manufactured from recycled and recyclable plastic materials. Its ventral face (1) is the part with holes used to position the plants that will be transplanted when grown. The number of holes (2) shall be variable between 9 and 27 cavities from 3 to 6 cm diameter and arranged in a quincunx fashion. The transplanted plants are inserted through these holes. The two vertical faces joined to the ventral face are not perforated (3).The ventral face is hinged and enables the UCIM to be filled with substrate. When full, it is sealed closed and is then ready to receive the transplants. The cavities or holes are smaller than the cell surface area so that the plants have greater area and there is less chance to lose substrate since its vertical position favours loss through the force of gravity or, caused by inadequate manipulation by the observer.

The dorsal face (4) presents two types of elements. The elements relating to the drainage holes (5) (2 cm diameter) coinciding with the four ends of this face. The two at the lowest topographic points are those corresponding to the fertigation drainage points. The other two are only operational when the UCIM is rotated through 180°. The second elements are double hooks (6), the functions of which are: quick installation in the definitive location, maintain the unit secured to the building structure, allow the UCIM to rotate while preventing manipulation by the observer.

The upper face is perforated by four equidistant holes (0.5 - 1.0 cm diameter). These enable fertigation fluid to enter from a self-compensated, anti-draining drip-feed.

Internally, the UCIM is made up of two complete partition walls parallel to the upper and lower faces, arranged so that the interior UCIM space is divided into three identical volumes (9). These are perforated with 1 - 2 cm diameter holes (10) to allow the fertigation to flow by gravity.

**Part B.** This is secured to the wall or three-dimensional structure on which the green roof is being executed (Figure 2). Complementary unit for anchoring, fertigation and UCIM drainage. It consists of three independent parts. The first receives the double hooks of the UCIMs and which is designed with double parallel bars spaced at 10 cm (11) and which holds the anchors, which secure the weight of the UCIM, the number of securing bars depends on these units in vertical. The purpose of the double hooks is to allow the UCIM to rotate in a 180° plane and remain in the same position, enabling the plant to re-orientate themselves according to operator wishes.

The second component is the fertigation unit. This consists of a fertigation network comprising primary (12), secondary (13) and drip-feed piping (14). The number of drip-feed (secondary) pipes is the same as the UCIM row number and the drip-feed number is the same as the UCIM number. Four micro-tubes leave each self-compensating and anti-draining drip-feed and terminate in the respective holes in the corresponding UCIM upper face. Since there is one drop-feed per UCIM, this will be optional from among those available on the market from two to eight litres per hour so that the fertigation volume can be chosen in function of each UCIM requirements.

The third component is the drainage network (15), which consists of low-pressure piping, the number of which corresponds to half the UCIM columns. These are fitted with receiving nozzles (16) that adapt in a sealed manner to a flexible silicone tube that connects to the UCIM lower evacuation holes. The number of receiver or collector nozzles is the same as twice the UCIMs. Between the drip-feed inlet and its corresponding outlets (two) a circuit is established that is autonomous and closed for each UCIM, without there being any contact whatsoever between irrigation and fertigation for each UCIM and any other. Consequently, there is no possibility of root disease transmission between UCIMs (since there is no contact between the various root systems).

This design applies to all current energy-efficient and environmentally sustainable architecture and is constructed using materials with manufacturing and final recycling processes that minimise environmental impact.

### Brief disclosure of the drawings

**Figure 1****:** Modular individual cultivation unit (UCIM), which consists of:
   1. Equal upper and lower faces
   2. Two closed equal lateral faces
   3. One ventral face and one dorsal face with different structures
**Figure 2****:** Three-dimensional structure that consists of three independent infrastructures:
   1. The securing anchoring for the individual cultivation units
   2. The fertigation infrastructure
   3. The drainage collection infrastructure: drainage network

### Disclosure of a preferred exemplary body

A description is given below of the use of the invention by means of an experiment that is detailed according to the attached table and manifests the effectiveness of the invention procedure. The described application is exemplified with the experiment according to the details of the attached table and which describes the experiment phases with *Thymus citriodorus* cv *Albo variegata* and *Rosmarinus officinales* quantified with the image treatment, so that the vegetation growth (vegetation coverage) is quantified over the considered UCIM surface, for which the lDRlSl 32® was employed, (lDRlSl, 2006. IDRISI Andes V32. Clark Labs, Clark University, 950 Main Street, Worcester, MA 01610-1477 USA). To this end, the average of four units of each example crop was used.

| | | **Percentage of green wall coverage and/or the UCIM by:** | |
|---|---|---|---|
| **Phases** | **Day** | ***Thymus citriodorus cv Albo variegata*** | ***Rosmarinus officinales*** |
| UCIM construction | 0 | | |
| Filling with alternative substrate KOKOFINA® | 5 | | |
| Ferigation with complete nutritive solution | 5 | 5 | 5 |
| Seedling transplant | 5 | 5 | 5 |
| Construction of part B over a wall 4 x 3 metres | 5-10 | 5 | 5 |
| Unit cultivation Construction Filling the UCIMs | 30 | 15 | 12 |
| Shaping prune | 35 | 25 | 22 |
| | 40 | 90 | 78 |
| | 60 | 100 | 85 |
| | 70 | 100 | 100 |
| | 90-110 | 100 | 100 |

It was then verified that after day 70 in this experiment, total wall coverage had been produced.

## Claims

1. Green roof coverage with independent three-dimensional modular units constructed with non-contaminant materials during manufacture and recyclable at the end of their useful lifetime, which comprises at least the following components:
1. Anchor structure
2. Fertigation system
3. Drainage system
4. Individual modular parallelopiped cultivation units (UCIM)

2. Green roof coverage with independent modular units according to claim 1 **characterised by** a UCIM that contains the following elements:
a. Upper and lower faces with four equidistant holes (0.5-1.0 cm diameter).
b. Two closed lateral walls.
c. Two internal partition walls parallel to the upper and lower faces and of these same dimensions. They divide the UCIM interior into three equal spaces. Each one having between 10 and 35 holes of 1-2 cm diameter and regularly distributed.
d. Closed ventral face except for between 9 and 27 regularly distributed holes of 3-6 cm diameter to hold the plants. Because they are closed (except for the hole surface) falling substrate is prevented, together with undesired manipulation. The plants planted in the UCIM cannot be manipulated by the observer.
e. Dorsal face with four drainage holes (2 cm diameter) at the ends of this face, the two lower ones connect to the drainage system. With four double hooks at 5 cm from the upper and lower ends, which permit vertical UCIM anchoring and 180° rotation in the same plane. It prevents removal and manipulation by the observer.

3. Green roof coverage with independent modular units according to claim 1 **characterised by** a fertigation system comprising a piping network with one self-compensating and anti-draining drip-feed per UCIM, with four irrigation micro-tubes and stabilisers that connect to for equidistant inlets on the upper face.

4. Green roof coverage with independent modular units according to claims 1 to 3 **characterised by** self-compensating anti-draining drip-feeds, one per UCIM and connected to four micro-tubes that carry the fertigation to the holes in the upper face. This permits individual UCIM irrigation, choosing the various drip-feeds available on the market as permitted by claim 6.

5. Green roof coverage with independent modular units according to claim 1 **characterised by** a drainage system comprising perpendicular piping with connectors, two connectors per UCIM, that collect drainage from the two lower holes (in the dorsal face). This permits full fertigation autonomy for each UCIM. The liquid volume that enters each UCIM does not have any contact at any time with that from another UCIM.

6. Use of green roof coverage with independent modular units so that, on the same panel, plants with different irrigation volume requirements may coexist in a mosaic manner, if desired, according to claims 1 to 5 for covering three-dimensional green roofs. This is achieved by varying the drip-feed type and alternative recyclable substrate type per UCIM.
